# EUROPEAN PATENT SPECIFICATION

(11) **EP 1 077 029 B1**
(45) Date of publication and mention of the grant of the patent: **20.11.2002**
(21) Application number: 00306551.3
(22) Date of filing: 01.08.2000
(51) Int. Cl.: A01N 47/34

(54) **Oil in water flowable pesticide formulation**
Fliessbare Pestizide Öl-in-Wasser Formulierungen
Formulation pesticide fluide de type huile-dans-eau

(30) Priority: 11.08.1999 US 148370
(43) Date of publication of application: 21.02.2001
(73) Proprietor: ROHM AND HAAS COMPANY, Philadelphia, Pennsylvania 19106-2399 (US)
(72) Inventor: Nguyen, Luong Tu, Lansdale, Pennsylvania 19446 (US)
(74) Representative: Buckley, Guy Julian

(56) References cited:
- WO-A-97/40686
- WO-A-99/13722
- DE-A- 2 552 867

## Description

The present invention relates to an oil in water pesticide formulation comprising an ethylene bisdithiocarbamate fungicide and cymoxanil. The present invention further relates to a process for preparing the formulation.

Fungicides typically have a limited spectrum of activity, that is, a limited number fungal species that the fungicide controls. As a result, in order to obtain control of a mixed spectrum of fungal species, a number of different fungicides are typically applied in combination. This may be accomplished by applying the fungicides in a series of applications or, more often, by applying a mixture of fungicides in one application. Such mixtures are prepared by mixing the individual fungicides in a spray tank immediately prior to application or by combining the individual fungicides into a single formulation which is subsequently diluted in the spray tank prior to application.

Because of their complementary spectra of activity, there are many combinations of fungicides which are used on a routine basis. One such combination is an ethylene bisditiocarbamate ("EBDC") in combination with 2-cyano-N-(ethylamino)carbonyl)-2-methoxyimino)acetamide ("cymoxanil") (see e.g. WO 99/13722 and DE 2 552 867). This combination provides excellent control of a broad spectrum of fungi particularly *Phycomycetes,* such as, for example, tomato late blight, potato late blight, grape downey mildew, and cucumber downey mildew. Both of these materials are typically provided as dry solid formulations, for example, as wettable powders, partly because cymoxanil is known to be unstable and quickly degraded in the presence of water. Therefore, the only formulation suitable for cymoxanil or cymoxanil blends with EBDC products available in the market today are the dry powders. However, there is a need to provide a liquid formulation because of the ease of use and to avoid the inconvenience associated with manipulating powders. Unfortunately, EBDC fungicides are also known to be unstable in many aqueous mixtures, particularly under acidic conditions (pH less than about 4.5).

I have discovered a unique combination of components which allows the combination of an EBDC fungicide and cymoxanil to form a stable oil in water formulation. The formulation is a composition comprising:
a) an ethylene bisdithiocarbamate fungicide;
b) cymoxanil;
c) a buffer comprising an oil soluble acid and a water soluble acid;
d) a thickener;
e) a surfactant;
f) a dispersant;
e) water; and
f) an agronomically acceptable oil;
wherein the pH of the composition is from 4 to 6.

The EBDC is selected from one or more of salts of ethylene bisdithiocarbamate, for example, the disodium (nabam), diammonium (amobam), potassium ammonium, zinc (zineb), or manganese (maneb); a coordination product of zinc ion and manganese ethylene bisdithiocarbamate (mancozeb); or tris(amine-(ethylene-(bis(dithiocarbanato))zinc(II) (metiram). More preferably, the EBDC is maneb or mancozeb. Most preferably, the EBDC is mancozeb. Preferably the EBDC comprises from 25 to 50 percent of the composition, more preferably from 35 to 50 percent, most preferably from 40 to 50 percent.

For purposes of this invention, all percentages expressed herein are percent by weight, unless otherwise specified.

Preferably, the cymoxanil comprises from 1 to 10 percent of the composition, more preferably from 3 to 7 percent, most preferably from 5 to 6 percent.

The type and the amount of acidic buffer reagents used are important to ensure the stability of the final blended product. The combined acid buffer reagents should maintain the pH from 4.0 to 5.5, preferably from 4.5 to 5.0, over one year of storage at room temperature, or approximately 25 °C. The oil soluble acid is preferably a fatty acid, more preferably an unsaturated or saturated C₁₀-C₂₀ fatty acid, most preferably oleic acid. The water soluble acid is a weak acid, preferably citric acid, fumeric acid, acetic acid, or sodium phosphate.

The oil soluble acid may comprise from 1 to 5 percent of the composition, preferably from 1 to 3 percent, more preferably from 1 to 2 percent. The water soluble acid may comprise from 0.5 to 3 percent of the composition, preferably from 0.5 to 2 percent, more preferably from 0.5 to 1 percent. The amount of each acid present will depend upon both the type of acid and the amount of EBDC and cymoxanil present. The higher the amounts of either fungicide, the more acid buffer reagent is required. The ratio of oil soluble acid to water soluble acid is preferably from 3:1 to 1:1; more preferably from 2:1 to 1:1.

One or more each of thickeners, surfactants, and dispersants useful in the composition of this invention are selected from such components which are known to those skilled in the agricultural formulation art. Preferred thickeners include starches, gums, casein, gelatin, and phococolloids; more preferred are gums; most preferred is xanthan gum. Preferred surfactants include non-ionic surfactants with a hydrophilic/lipophilic balance of from 5 to 8; more preferred are ethoxylated alcohols, most preferred are ethoxylated branched alcohols. Preferred dispersants are lignin derivatives; more preferred are lignosulfonates and naphthalene condensates of lignosulfonates. The amount of each of these materials used in the composition will vary depending upon the amounts of EBDC and cymoxanil used. Preferably, the amount of surfactant is from 1 to 5 percent, more preferably from 3 to 4 percent; the amount of dispersant is from 1 to 5 percent, more preferably from 2 to 3 percent; and the amount of thickener is from 1 to 5 percent, more preferably from 2 to 4 percent.

Agronomically acceptable oils useful in this invention are oils suitable for agricultural application, typically of high purity, and generally comprised of a single aliphatic compound. They may be branched or linear in nature with typical carbon chain lengths of C₂₀ to C₂₆. They are characterized by low odor, low solvency for organic and organo-metallic compounds, low phytotoxicity to plants, and low volatility. Typical physical characteristics of agronomically acceptable oils include; specific gravity of 0.75-0.90 at 16 °C , flash point greater than 49 °C, viscosity of 50 to 150 SSU at 38 °C, unsulfonated residue greater than 90%, and a distillation range of 175 °C to 235 °C. Commercial examples of such oils include: Orchex 796 oil, Orchex 692 oil, Sunspray 7N oil, Sunspray 11N oil (Sun Company); Oleo Blanco oil (also known as white oil, Witco Corp. or Pennzoil-Quaker State Company); Isopar M oil, Isopar V oil, 100 Neutral oil (Chevron Oil Co.), and Exxsol D-130 oil (Exxon Corp.). Other non-phytotoxic oils such as mineral oils; crop oils such as, for example, vegetable oil, peanut oil, and cottonseed oil; or synthetic oils are acceptable substitutes for aliphatic oils.

Optionally, additional adjuvants may be incorporated into the composition including, for example, additional wetting agents (e. g., surfactants), spreading agents, additional dispersing agents, stickers, adhesives, processing aids (e. g., antifoaming agents), antifreeze agents (e. g., glycols such as ethylene, propylene, and dipropylene glycol), buffers, additional thickeners, and stabilizers (e. g., inorganic salts). Such adjuvants commonly used in the art can be found in McCutcheon's Emulsifiers and Detergents, McCutcheon's Emulsifiers and Detergents/Functional Materials and McCutcheon's Functional Materials all published annually by McCutcheon Division of MC Publishing Company (New Jersey, USA) or *Detergents and Emulsifiers, Annual,* (Allured Publishing Company, Ridgewood, New Jersey, USA).

When the composition comprises less than about 45 percent EBDC fungicide or about 5% cymoxanil, the amount of oil used is decreased and the amount of water used is increased. In addition, the amount of thickener is also increased to ensure the physical stability of the product in storage. The total amount of EBDC, cymoxanil, and thickener is adjusted so that the initial viscosity of the resulting composition of the invention is from 1000 to 1800 centipoise at room temperature (approximately 25 °C) measured using a standard viscometer such as, for example, a Brookfield viscometer with a #2 or #3 spindle at 30 rpm. Preferably the viscosity of the composition is from 1.3 to 1.6 Pa.s (1300 to 1600 centipoise); more preferably from 1.4 to 1.5 Pa.s (1400 to 1500 centipoise). During storage, the viscosity of the composition may change to as low as 0.8 Pa.s (800 centipoise) or as high as 1.8 Pa.s (1800 centipoise).

One advantage of the compositions of this invention is that not only are they stable themselves, but when diluted with water, for example, in a spray tank, they form a stable aqueous mixture. This is important because many fungicide mixture formulations do not form stable mixtures when diluted with water. Instead, they form gels, insoluble solids, sticky masses, and/or foams which make it impossible to apply the diluted mixture because of clogging of the spraying apparatus.

The composition of the present invention is useful for the control of phytopathogenic fungi on crops and may be applied as a seed protectant, as a foliar fungicide, or as a combination thereof.. The quantity of the composition required for control of a particular spectrum of fungi will depend upon the growth stage of the crop, the crop to be treated, and the relative stage of infection by the fungi. Under some conditions the compositions of the invention may be incorporated into the soil or other growth medium prior to planting a crop. This incorporation may be by any convenient means, including mixing with the soil, applying the compositions to the surface of the soil and then discing or dragging into the soil to the desired depth, or by employing a liquid carrier. The compositions of this invention can be diluted or applied as is to plant foliage and/or soil as aqueous sprays by methods commonly employed, such as conventional high-volume hydraulic sprays, low-volume sprays, air-blast, and aerial sprays. The dilution and rate of application will depend upon the type of equipment employed, the method and frequency of application desired, the fungicide application rate, and the fungi to be controlled. The compositions can be mixed with fertilizers or fertilizing materials before their application. The compositions can be utilized as the sole pesticidal agent or they can be employed in conjunction with other pesticidal agents such as, for example, microbicides, other fungicides, herbicides, insecticides, and acaricides.

For some applications, one or more additional fungicides may be added to the compositions of the present invention, thereby providing additional advantages and effectiveness. When additional fungicides are employed, the relative proportions used will depend upon the relative efficacy and selectivity of the fungicides in the composition as well as the relative efficacy and selectivity of the additional fungicide.

To prepare the composition, the components need not be combined in any particular order. However, to prevent unwanted separation of components and for ease of preparation, the following general sequence is recommended:
1) Combine the water and the water soluble components and mix until a uniform aqueous mixture forms;
2) Add the thickener and mix until a second uniform aqueous mixture forms;
3) In a separate container combine the oil and the oil soluble components and mix until a uniform oil mixture forms;
4) Combine the second aqueous mixture and the oil mixture and mix until a stable emulsion forms;
5) Add solid EBDC and cymoxanil, either individually or as a premix, to the emulsion;
6) Mix until the mixture becomes uniform.

One skilled in the art will recognize that any one of a variety of apparatus may be used to accomplish the mixing steps. Strong agitation is not required. Preferred mixing apparatus include those mixers with contrarotating blades.

It is important during preparation of the composition of the invention that in step 4 the pH of the emulsion is maintained below 4.0, preferably below 3.8. It is also important that after addition of the EBDC the pH of the mixture is maintained below 5.0, preferably below 4.8 during subsequent mixing.

The following examples illustrate several aspects of this invention:

### Example 1 - Preparation of a Mancozeb/Cymoxanil Oil in Water Flowable Formulation

Using the general procedure outlined above, an oil in water flowable formulation was prepared as follows (all parts are express as parts by weight):
1) Add the following ingredients to a formulation cup containing water (34.3 parts) and equipped with a mechanical agitator (mixer) and mixing speed control:

| | |
|---|---|
| Reax™ 88B dispersant (Westvaco Co.) | 2.0 parts |
| Geropon™ T-77 surfactant(Rhone-Poulenc,Inc.) | 1.0 parts |
| Citric Acid | 0.8 parts |
| Kelsan™ S (2% aqueous solution) thickener (Dow Chemical Co.) | 3.0 parts |

Mix this mixture until a uniform aqueous mixture forms.
2) Add the following ingredients to a separate cup containing oil (8.0 parts, Prorex™ 38 oil, Mobil Oil Corp.):

| | |
|---|---|
| Tergitol™ 15-S-5 surfactant (Union Carbide Corp.) | 0.8 parts |
| Tergitol™ 15-S-7 surfactant (Union Carbide Corp.) | 0.2 parts |
| Atlox™ 4914 surfactant (ICI Inc.) | 0.2 parts |
| Oleic Acid | 1.5 parts |
| BreakThrough™ OE444 surfactant (Goldschmidt Chemical Corp.) | 0.5 parts |

Hand mix this mixture with a spatula until a uniform oil mixture forms.
3) Add slowly the oil mixture to the aqueous mixture and mix until a stable and homogeneous oil in water emulsion forms. Check the pH and, if necessary, adjust to ensure the pH is 3.8 or lower.
4) Add slowly to the emulsion mancozeb 86% technical (42 parts, DITHANE® M-45® fungicide, Rohm and Haas Company) while mixing. Check the pH and, if necessary, adjust to ensure the pH is 4.8 or lower. Then add cymoxanil 95% technical (5.7 parts, Curzate® fungicide, DuPont Company) slowly with good mixing. The mixture becomes thickened at this point. Maintain good mixing for another 30 min to ensure all ingredients are mixed well. Check the formulated product final viscosity (around 1.5 Pa.s (1500 cps) and pH (at 4.8) and adjust, if necessary, before packaging.

### Example 2 - Stability of the Composition of Example 1

A portion of the composition produced in Example 1 was held in an oven at 40°C oven and then evaluated for physical/chemical properties. Another portion of the composition produced in Example 1 was held for three months at room temperature (approximately 25 °C) and then evaluated for physical/chemical properties. The results of the evaluations are as follows:

| Parameter | Initial (3 hours after production) | 4 weeks at 40°C | 3 months at room temperature |
|---|---|---|---|
| Viscosity, cps | 1500 | 1700 | 800 |
| Suspensibility, %* | 95 | 95 | 95 |
| 325 mesh screen retention, % | 0.02 | 0.02 | 0.02 |
| pH | 4.7 | 5.5 | 5.0 |

| % | | | |
|---|---|---|---|
| mancozeb | 36.0 | 35.0 | 35.0 |
| cymoxanil: | 5.4 | 4.9 | 5.2 |
| Specific gravity, g/ml | 1.292 | 1.292 | 1.292 |
| Mean particle size, µ | 1.5 | 1.5 | 1.5 |
| Color | yellow | yellow | yellow |
| Moisture, % | 37.0 | 37.0 | 37.0 |

| | | | |
|---|---|---|---|
| * = Suspensibility was measured by adding 1 g of the composition to 99 ml of Army Hard water (342 ppm hardness) in a cylinder and then inverting the cylinder 30 times over a period of 90 seconds. After standing for 30 minutes, the amount of unsuspended residue was determined. | | | |

Chemically, there was about 10% cymoxanil loss under 40°C storage. Evaluation of an additional portion of Example 1 after 1 year at room temperature storage showed a similar loss. There was about a 3% mancozeb loss the same storage conditions. This level of degradation is considered normal and acceptable for formulated cymoxanil and mancozeb products. Samples stored at room temperature after 3 months showed little change in either mancozeb or cymoxanil levels. Physically, the only evidence of change in the room temperature storage sample is the decrease in viscosity. This decrease is most likely due to the mancozeb which gives the initial viscosity of around 1.5 Pa.s (1500 centipoise) but which declines upon standing. Based upon these data below, we can conclude that the blended product is stable up to one year under normal storage conditions.

Under similar storage conditions, a sample of cymoxanil in the presence of water at a pH of 6 or greater will rapidly degrade, releasing dangerous toxic hydrogen cyanide gas and forming an irreversible, hard gel product which is unacceptable for commercial use. Under similar storage conditions mancozeb in the presence of water at a pH of 4 or less will form a highly viscous material which is also unacceptable for commercial use.

## Claims

1. A fungicide composition comprising:
a) an ethylene bisdithiocarbamate fungicide;
b) cymoxanil;
c) a buffer comprising an oil soluble acid and a water soluble acid;
d) a thickener;
e) a surfactant;
f) a dispersant;
e) water; and
f) an agronomically acceptable oil;
wherein the pH of the composition is from 4 to 6.

2. The composition of claim 1 comprising:
a) from 25 percent to 50 percent, by weight, of an ethylene bisdithiocarbamate fungicide;
b) from 1 percent to 10 percent, by weight, cymoxanil;
c) a buffer comprising from 1 percent to 5 percent, by weight, of an oil soluble acid and from 0.5 percent to 3 percent, by weight of a water soluble acid;
d) from 1 percent to 5 percent, by weight, of one or more thickeners;
e) from 1 percent to 5 percent, by weight, of one or more surfactants;
f) from 1 percent to 5 percent, by weight, of one or more a dispersants;
e) water; and
f) an agronomically acceptable oil.

3. The composition of claim 1 wherein the ethylene bisdithiocarbamate fungicide is mancozeb.

4. The composition of claim 1 wherein the water soluble acid is fumaric acid, citric acid, or acetic acid.

5. The composition of claim 1 wherein the oil soluble acid is oleic acid.

6. A process for preparing the composition of claim 1 comprising the steps of:
a) admixing water, the water soluble components, and the thickener of the composition until a uniform aqueous mixture forms;
b) in a separate container admixing oil and the oil soluble components until a uniform oil mixture forms;
c) admixing the aqueous mixture and the oil mixture until a stable emulsion forms;
d) maintaining or adjusting the pH of the emulsion to from 3.5 to 3.8;
e) admixing solid ethylene bisdithiocarbamate fungicide and cymoxanil with the emulsion until a uniform mixture forms; and
f) maintaining or adjusting the pH of the mixture to from 4.0 to 4.8.

7. A fungicide composition produced by a process comprising the steps of:
a) admixing water and a water soluble acid until a uniform aqueous suspension forms;
b) in a separate container admixing an agronomically acceptable oil and an oil soluble acid until a uniform oil mixture forms;
c) admixing the aqueous suspension and the oil mixture until a stable emulsion forms;
d) maintaining or adjusting the pH of the emulsion to from 3.5 to 3.8;
e) admixing solid ethylene bisdithiocarbamate fungicide and cymoxanil with the emulsion until a uniform mixture forms; and
f) maintaining or adjusting the pH of the mixture to from 4.0 to 4.8.

## Patentansprüche

1. Fungizidzusammensetzung umfassend:
a) ein Ethylenbisdithiocarbamat-Fungizid;
b) Cymoxanil;
c) einen Puffer, der eine öllösliche Säure und eine wasserlösliche Säure umfasst;
d) ein Verdickungsmittel;
e) eine oberflächenaktive Substanz;
f) ein Dispersionsmittel;
e) Wasser, und
f) ein agronomisch akzeptables Öl;
wobei der pH-Wert der Zusammensetzung zwischen 4 und 6 liegt.

2. Die Zusammensetzung gemäß Anspruch 1 umfassend:
a) von 25 Gew.-% bis 50 Gew.-% eines Ethylenbisdithiocarbamat-Fungizids;
b) von 1 Gew.-% bis 10 Gew.-% Cymoxanil;
c) einen Puffer, welcher 1 Gew.-% bis 5 Gew.-% einer öllöslichen Säure und 0,5 Gew.-% bis 3 Gew.-% einer wasserlöslichen Säure umfasst;
d) 1 Gew.-% bis 5 Gew.-% eines oder mehrerer Verdickungsmittel;
e) 1 Gew.-% bis 5 Gew.-% von einem oder mehreren oberflächenaktiven Substanzen;
f) von 1 Gew.-% bis 5 Gew.-% eines oder mehrerer Dispersionsmittel;
e) Wasser, und
f) ein agronomisch akzeptables Öl.

3. Zusammensetzung gemäß Anspruch 1, wobei das Ethylenbisdithiocatbamat-Fungizid Mankozeb ist.

4. Zusammensetzung gemäß Anspruch 1, wobei die wasserlösliche Säure Fumarsäure, Zitronensäure oder Essigsäure ist.

5. Zusammensetzung gemäß Anspruch 1, wobei die öllösliche Säure Ölsäure ist.

6. Verfahren zur Herstellung der Zusammensetzung gemäß Anspruch 1 umfassend die Schritte:
a) Vermischen von Wasser, den wasserlöslichen Komponenten und dem Verdickungsmittel der Zusammensetzung bis sich eine einheitliche wässrige Mischung bildet;
b) Vermischen von Öl und den öllöslichen Komponenten in einem separaten Behälter bis sich eine einheitliche Ölmischung ausbildet;
c) Vermischen der wässrigen Mischung und der Ölmischung bis sich eine stabile Emulsion bildet;
d) Beibehalten oder Einstellen des pH-Wertes der Emulsion auf 3,5 bis 3,8;
e) Vermischen des festen Ethylenbisdithiocarbamat-Fungizids und Cymaxanil mit der Emulsion bis sich eine einheitliche Mischung bildet;
f) Beibehalten oder Einstellen des pH-Wertes der Mischung auf 4,0 bis 4,8.

7. Fungizidzusammensetzung, hergestellt nach einem Verfahren umfassend die Schritte:
a) Vermischen von Wasser und einer wasserlöslichen Säure bis sich eine einheitliche wässrige Suspension bildet;
b) Vermischen eines agronomisch akzeptablen Öls und einer öllöslichen Säure in einem separaten Behälter bis sich eine einheitliche Ölmischung bildet;
c) Vermischen der wässrigen Suspension und der Ölmischung bis sich eine stabile Emulsion bildet;
d) Beibehalten oder Einstellen des pH-Wertes der Emulsion auf 3,5 bis 3,8;
e) Vermischen des festen Ethylenbisdithiocarbamat-Fungizids und Cymoxanil mit der Emulsion bis sich eine einheitliche Mischung bildet; und
f) Beibehalten oder Einstellen des pH-Wertes der Mischung auf 4,0 bis 4,8.

## Revendications

1. Composition fongicide comprenant :
a) un fongicide de type éthylènebisdithiocarbamate ;
b) du cymoxanil ;
c) un tampon comprenant un acide oléosoluble et un acide hydrosoluble ;
d) un épaississant ;
e) un tensioactif ;
f) un dispersant ;
e) de l'eau ; et
f) une huile acceptable en agronomie ;
dans laquelle le pH de la composition est de 4 à 6.

2. Composition selon la revendication 1 comprenant :
a) de 25 pour cent à 50 pour cent, en poids, d'un fongicide de type éthylènebisdithiocarbamate ;
b) de 1 pour cent à 10 pour cent, en poids, de cymoxanil ;
c) un tampon comprenant de 1 pour cent à 5 pour cent, en poids, d'un acide oléosoluble et de 0,5 pour cent à 3 pour cent, en poids, d'un acide hydrosoluble ;
d) de 1 pour cent à 5 pour cent, en poids, d'un ou plusieurs épaississants ;
e) de 1 pour cent à 5 pour cent, en poids, d'un ou plusieurs tensioactifs ;
f) de 1 pour cent à 5 pour cent, en poids, d'un ou plusieurs dispersants ;
e) de l'eau ; et
f) une huile acceptable en agronomie.

3. Composition selon la revendication 1 dans laquelle le fongicide éthylènebisdithiocarbamate est le mancozeb.

4. Composition selon la revendication 1 dans laquelle l'acide hydrosoluble est l'acide fumarique, l'acide citrique ou l'acide acétique.

5. Composition selon la revendication 1 dans laquelle l'acide oléosoluble est l'acide oléique.

6. Procédé de préparation de la composition de la revendication 1 comprenant les étapes consistant à :
a) mélanger de l'eau, les constituants hydrosolubles et l'épaississant de la composition jusqu'à ce qu'il se forme un mélange aqueux uniforme ;
b) dans un récipient séparé, mélanger l'huile et les constituants oléosolubles jusqu'à ce qu'il se forme un mélange huileux uniforme ;
c) mélanger le mélange aqueux et le mélange huileux jusqu'à ce qu'il se forme une émulsion stable ;
d) maintenir ou ajuster le pH de l'émulsion à une valeur de 3,5 à 3,8;
e) mélanger le fongicide éthylènebisdithiocarbamate solide et le cymoxanil avec l'émulsion jusqu'à ce qu'il se forme un mélange uniforme ; et
f) maintenir ou ajuster le pH du mélange à une valeur de 4,0 à 4,8.

7. Composition fongicide produite par un procédé comprenant les étapes consistant à :
a) mélanger de l'eau et un acide hydrosoluble jusqu'à ce qu'il se forme une suspension aqueuse uniforme ;
b) dans un récipient séparé, mélanger une huile acceptable en agronomie et un acide oléosoluble jusqu'à ce qu'il se forme un mélange huileux uniforme ;
c) mélanger la suspension aqueuse et le mélange huileux jusqu'à ce qu'il se forme une émulsion stable ;
d) maintenir ou ajuster le pH de l'émulsion à une valeur de 3,5 à 3,8 ;
e) mélanger le fongicide éthylènebisdithiocarbamate solide et le cymoxanil avec l'émulsion jusqu'à ce qu'il se forme un mélange uniforme ; et
f) maintenir ou ajuster le pH du mélange à une valeur de 4,0 à 4,8.
